Europäisches Patentamt

(19) European Patent Office

Office européen des brevets

(11) Publication number: **0 116 599**
**B1**

(12) **EUROPEAN PATENT SPECIFICATION**

(45) Date of publication of patent specification: 02.12.87

(21) Application number: 83902685.3

(22) Date of filing: 25.08.83

(86) International application number:
PCT/AU83/00117

(87) International publication number:
WO 84/01005 15.03.84 Gazette 84/07

(51) Int. Cl.⁴: **F 16 B 13/06, F 16 B 13/12,
E 21 D 21/00**

(54) **EXPANSION SLEEVE AND ANCHORAGE DEVICE INCORPORATING THE SLEEVE.**

(30) Priority: 27.08.82 AU 5612/82

(43) Date of publication of application:
29.08.84 Bulletin 84/35

(45) Publication of the grant of the patent:
02.12.87 Bulletin 87/49

(84) Designated Contracting States:
AT BE CH DE FR LI LU NL SE

(56) References cited:
AU-A- 571 466
AU-A-2 936 671
AU-B- 982 466
AU-B-2 715 267
AU-B-3 179 371
AU-B-3 492 678
AU-B-3 608 568
AU-B-4 484 964
DE-A-2 730 122
DE-A-2 816 544
DE-C- 736 625
DE-U-8 008 673
DK-C- 125 488
FR-A- 697 676
FR-A-2 341 059
GB-A-1 487 030
US-A-2 553 614

(73) Proprietor: ILLINOIS TOOL WORKS INC.
8501 West Higgins Road
Chicago Illinois 60631 (US)

(72) Inventor: BETON, Richard, John
17 Cluney Court
South Blackburn, VIC 3130 (AU)

(74) Representative: Topps, Ronald et al
D. YOUNG & CO 10 Staple Inn
London WC1V 7RD (GB)

Courier Press, Leamington Spa, England.

## Description

This invention relates to an expansion sleeve for anchorage devices such as masonry anchors and to an anchorage device incorporating the sleeve.

Australian patent specification 278,848 discloses an anchorage device, suitable for use as a masonry anchor, which includes a cylindrical expansion sleeve of metal having plural slits that extend longitudinally from a forward end of the sleeve to respective circumferentially spaced apertures in the sleeve. The sleeve is fitted over a threaded bolt provided with a conical head of external diameter greater than the internal diameter of the sleeve. In use, the device is placed in a cavity a little larger than the device, and the conical head is drawn into the slit end by tightening a nut on the bolt, whereby to splay the divided sleeve segments into firm engagement with the cavity.

The apertures in this previously proposed sleeve are elongate and extend longitudinally of the sleeve, the apertures being circumferentially spaced whereby a longitudinal land is defined between each pair of adjacent apertures. The column strength of these lands is such that at a predetermined compressive force consequent on a predetermined torque on the nut, the lands will collapse. This collapse permits the sleeve to shorten in length and enables, for example a bowed workpiece to be drawn into tight face-to-face engagement with the masonry. If, however, the nut continues to be rotated, the sleeve continues to collapse, and this results in the inner end of the sleeve being drawn towards the outside of the hole, thus reducing the anchorage. This latter adverse effect cannot be overcome simply by reducing the length of the apertures, as this, in turn, would cause an increase in the column strength of the lands which would increase the torque necessary to collapse the sleeve; a corresponding reduction in the width of the lands may result in difficulties in manufacture as a result of having to die punch closely-spaced apertures in the sleeve and, also, would alter the flexibility and anchoring characteristics of the sleeve segments.

According to the present invention, there is provided a cylindrical expansion sleeve of metal for an anchorage device, said sleeve having opposed ends, a plurality of circumferentially spaced apertures intermediate said ends, and a plurality of slits each extending longitudinally from one of said ends to a respective one of said apertures, each said aperture having a major dimension and a minor dimension at right angles to the major dimension, said sleeve being characterised in that the major dimension of each aperture lies at an acute angle to an axial plane of the sleeve.

It is found that the angular disposition of the apertures will permit the sleeve to shorten by closure of the apertures once the torsional load exceeds a determinable value. The apertures may be of substantially elliptical or rectangular form, with arcuate ends. Preferably the major axes of the apertures lie at an angle of from 20° to 45°, most preferably at about 30°, to a respective axial plane intersecting the geometrical centre of the aperture. The apertures are preferably uniform and arranged with their longer sides substantially parallel.

The manufacture of divided expansion sleeves often gives rise to a very slight but detectable bowing of the sleeve segments away from an exact cylindrical configuration. It has been appreciated, in accordance with a preferred aspect of the invention, that the deliberate provision of such bowing, to a material extend somewhat greater than hitherto obtained by accident, is a very convenient means of minimizing relative rotation of the sleeve with respect to the expansion member and the cavity.

Advantageously, therefore, circumferentially divided sleeve segments defined by the aforesaid slits are distorted from an exact collective cylindrical configuration, to an extent such that the diameters $O_D$ and $I_D$ of the outside and inside pitch circles at said one end are given by:—

$$O_D \simeq N_D + (T \pm 0.5T)$$

$$I_D = O_D - (3T \pm 0.5T)$$

where $N_D$ is the nominal outside diameter at the undivided portion of the sleeve, and T is the thickness of the sleeve.

Said deformation is advantageously in the form of regular triangulation, preferably such that the sleeve segments lie on a diameter along their longitudinal centre lines and are located more inwardly at their opposed side edges. This diameter is slightly greater than the undivided portion of the sleeve and then the diameter of the hole in which the anchor is inserted.

The expansion sleeve according to the invention may be provided in combination with an expansion member, such combination then comprising an anchorage device adapted for use as a masonry anchor. The expansion member includes a conical portion dimensioned to expand the circumferentially divided sleeve segments defined by the slits, on being drawn into said one end of the sleeve. The expansion member may be an internally threaded conical nut which receives a complementary threaded bolt, or may itself be a bolt having a conical head at one end and a threaded portion at the other end for engagement with a complementary nut. Alternatively, a stud with an enlarged head may be employed as the expansion member.

The invention will be further described, by way of example only, with reference to the accompanying drawings, in which:—

2

Figure 1 is a perspective view of a masonry anchor incorporating an expansion sleeve in accordance with the invention;

Figure 2 is a side elevational view of the expansion sleeve shown in Figure 1;

Figure 3 is an end view of the expansion sleeve, and

Figures 4A and 4B show the masonry anchor in situ after it has collapsed longitudinally to respectively different extents.

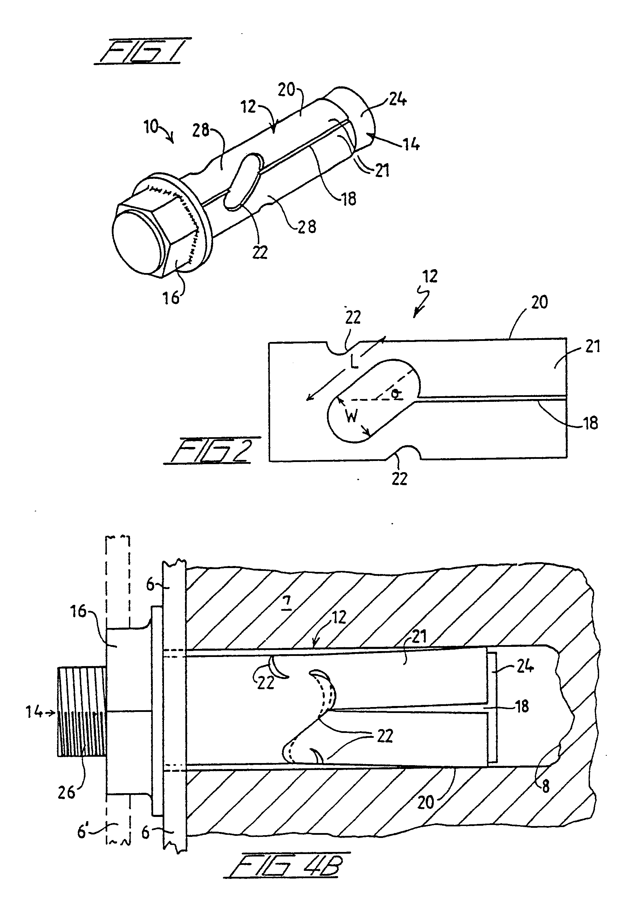

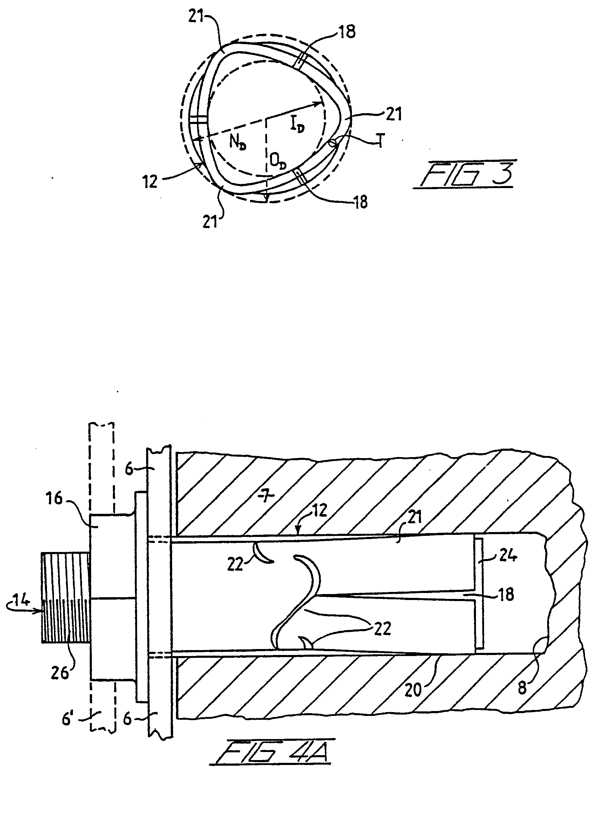

The masonry anchor 10 illustrated in Figure 1 includes an expansion sleeve 12, a complementary bolt 14 and a washered nut 16 threadingly engageable with the bolt 14. Sleeve 12 is segmented at its forward end 20 by three (or more) slits 18 which extend longitudinally from forward end 20 to respective apertures 22 formed in sleeve 12 intermediate its ends. Bolt 14 is formed at its inner end with an integral conical head 24 of similar maximum diameter to the outer diameter of sleeve 12, and at its outer end with a threaded portion 26. This threaded portion 26 mounts nut 16. According to conventional practice, the anchor may be employed to secure a workpiece 6 to a masonry wall 7 (Figure 4) by forming a cavity 8 in the workpiece 6 and the masonry wall 7, placing the device in the cavity and then rotating nut 16 to draw the bolt head 24 into the end 20 of sleeve 12. This is effective to splay sleeve segments 21 defined by slits 18 into tight engagement with the cavity. One or both surfaces of sleeve segments 21 may be knurled if desired to enhance the grip.

In accordance with a first aspect of the invention, each of the apertures 22 exhibits a major dimension and a minor dimension, the major dimension extending at an acute angle $\theta$ (Figure 2) to an axial plane of the sleeve containing the associated slit 18. More particularly, each aperture is generally rectangular with arcuate ends and its minor dimension W (Figure 2) is preferably between one half and one third its major dimension L. The aforesaid angle of inclination $\theta$ of the major dimension is preferably between 20 and 45°, advantageously about 30°, and all three apertures are preferably equal and of the same inclination.

The resultant land 28 separating apertures 22 is preferably of a width between 0.5 and 0.75 of the minor dimension W of the apertures. In general, the relative widths of apertures 22 and intervening lands 28, the dimension L and the angle $\theta$, are determined empirically so that, when the load or torque applied to the bolt has reached a predetermined value at which the forward segmented end 20 of the sleeve has secured an adequate grip on the sides of the cavity in the masonry, there is no further movement of end 20 and the apertures 22 begin to close up by relative twisting of the portions of the sleeve forward and rearward of the apertures. In this manner, the rearward portion of the sleeve moves forwardly as the anchor is progressively further tightened, to take up any longitudinal clearance between the workpiece or article being secured and the face of the masonry. This is demonstrated in Figure 4, in which the position of the workpiece at the commencement of collapse is shown in broken lines 6'.

If there is sufficient relative twisting, the apertures 22 will fold to such an extent that one edge of the aperture will tuck under the opposite edge (Figure 4B) thereby causing a doubling up of the sleeve thickness and widening of the anchor at 6 locations around the periphery of the anchor. Hence, if at the predetermined load, the sleeve has not secured an adequate grip in the cavity, the grip can be enhanced by the longitudinal collapse at the apertures to provide additional sleeve diameter clamped against the wall of the cavity. In general, the predetermined load at which closing up of apertures 22 begins to occur may be selected as a fraction, say between 0.7 and 0.8, of the recommended maximum tightening torque for the anchor. It will be understood that the dimensional parameters appropriate to a particular predetermined load, viz. the dimensions W, L and $\theta$ and the width of land 28, will depend in part on the thickness, strength and temper of the material of the sleeve. The engagement and tucking action of the opposed edges of the apertures also acts to limit the extent of collapse of the sleeve. This is of importance because if after the article being secured has been drawn into tight engagement with the masonry, the sleeve is able to continue to collapse, further tightening of the nut will simply have the effect of drawing the forward end of the sleeve rearwardly (that is, towards the outside of the hole) without increasing the anchoring force. The inclined disposition of the apertures permits a definite and restricted collapse to occur, but without reducing the torque required to initiate collapse.

According to a preferred aspect of the invention, the divided sleeve segments 21 are deformed in manufacture to provide a degree of bowing or triangulation, preferably such that the longitudinal centre portions of the segments lie on a pitch circle slightly larger than the rear unsegmented portion of the sleeve, while the side rims of the segments at slits 18 are distorted somewhat inwardly so that the diameters $O_D$ and $I_D$ of the outside and inside pitch circles (Figure 3) at end 20 are given by:

$$O_D \simeq N_D + (T \pm 0.5T)$$

$$I_D = O_D - (3T \pm 0.5T)$$

where $N_D$ is the nominal outside diameter at the undivided portion of sleeve 12 and T is the thickness of the sleeve. $I_D$ is effectively the size of the largest ring gauge able to be inserted into the bowed sleeve, while $O_D$ is effectively the size of the smallest ring gauge able to accept end 20 of the sleeve.

Preferably, $O_D$ is between $(I_D + 3T)$ and $(I_D + 3.5T)$ and is also between $(N_D + 0.7T)$ and $(N_D + 1.2T)$.

It is found that by means of the illustrated bowing of the divided segments of the sleeve, an excellent non-rotational grip is achieved, on the one hand between conical bolt head 24 and sleeve 12, and on the other, once contact with the cavity wall has been made, between the sleeve and cavity. On the other hand, the segments are easily deformed to permit the anchor to be tapped home. It is known that masonry cavities drilled with rotary hammers or impact drills and carbide tipped masonry drill bits are in fact slightly triangulated: in these cases then, the bowed sleeve end advantageously matches the cavity.

The bowing may be inverse of that shown, that is with the side rims of the sleeve segments outwardly with respect to their centres, but that shown is thought to achieve a better grip between the bolt head and the sleeve segments, due to the sheared edges of the sleeve being more likely to grip the bolt head, particularly if the head is provided with anti-rotation formations.

Some exemplary anchorage devices according to the invention are set out in the following table.

TABLE 1

Dimensions in mm

| Sample No. | $N_D$ | T | θ | L | W | $O_D$ | $I_D$ |
|---|---|---|---|---|---|---|---|
| A | 8 | 0.8 | 30° | 8.0 | 3.5 | 8.6 | 6.0 |
| B | 12 | 0.9 | 30° | 12.0 | 6 | 12.7 | 10.0 |
| C | 16 | 1.5 | 30° | 16.0 | 8.0 | 17.0 | 11.8 |

$N_D$=nominal outside diameter of sleeve
T=thickness of sleeve
L=length of apertures 22
W=width of apertures 22
$O_D$=outside diameter of bowed end
$I_D$=inside diameter of bowed end

It will be noted from the foregoing table that, as a generality, the length of each aperture 22 (the major dimension) is about equal to the sleeve diameter and the width of each aperture 22 (the minor dimension) is about one half of the length of the aperture. It will also be noted that the sleeve is essentially of thin-walled construction in order to meet commercially standard relationships required between bolt diameter and hole diameter.

The described arrangement has been advanced merely by way of explanation and many modifications may be made thereto without departing from the scope of the invention as herein defined.

**Claims**

1. A cylindrical expansion sleeve of metal for an anchorage device, said sleeve (12) having opposed ends, a plurality of circumferentially spaced apertures (22) intermediate said ends, and a plurality of slits (18) each extending longitudinally from one of said ends (20) to a respective one of said apertures (22), each said aperture having a major dimension (L) and a minor dimension (W) at right angles to the major dimension, characterised in that the major dimension (L) of each aperture lies at an acute angle (θ) with respect to an axial plane of the sleeve.

2. A sleeve according to claim 1, characterised in that said acute angle is in the range 20° to 45°.

3. A sleeve according to claim 2, characterised in that said acute angle is about 30°.

4. A sleeve according to any one of claims 1—3, characterised in that each of said apertures (22) comprises substantially parallel sides in the direction of said major dimension (L), and rounded ends.

5. A sleeve according to any one of claims 1—4, characterised in that the sleeve (12) is divided circumferentially by said slits (18) into sleeve segments (21) which are distorted from an exact collective cylindrical configuration, to an extent such that the diameters $O_D$ and $I_D$ of the outside and inside pitch circle diameter at said one end (20) of the sleeve (12) are:

$$O_D \simeq N_D + (T \pm 0.5T)$$

$$I_D = O_D - (3T \pm 0.5T)$$

where $N_D$ is the nominal outside diameter at the undivided portion of the sleeve, and T is the thickness of the sleeve.

6. A sleeve according to any one of claims 1—5, characterised in that the apertures (22) are separated circumferentially one from the other by lands (28) having a width that is equal to 0.5 to 0.75 of the minor dimension (W) of said apertures.

7. An anchorage device for use as a masonry anchor, said device comprising a cylindrical expansion

**0 116 599**

sleeve of metal and an expansion member for expanding the sleeve, characterised in that said expansion sleeve is a sleeve according to any one of the preceding claims.

8. An anchorage device according to claim 7, characterised in that said expansion member comprises a bolt (14) having a conical head (24) fitting within said sleeve (12) at said one end (20), said conical head (24) increasing in cross-sectional size in a direction outwardly of said one end of the sleeve, whereby said one end of the sleeve is expanded circumferentially as the conical formation is drawn into the sleeve.

**Patentansprüche**

1. Zylindrische Ausdehnungshülse aus Metall für eine Verankerungsvorrichtung, wobei die Hülse (12) gegenüberliegende Enden, eine Mehrzahl von auf dem Umfang in Abständen voneinander liegenden Öffnungen (22) zwischen den Enden und eine Mehrzahl von Schlitzen (18) aufweist, deren jeder sich von einem der genannten Enden (20) in Längsrichtung zu einer betreffenden Öffnung (22) erstreckt, von denen jede eine große Abmessung (L) und eine kleine Abmessung (W) im rechten Winkel zur großen Abmessung hat, dadurch gekennzeichnet, daß die große Abmessung (L) jeder Öffnung in einem spitzen Winkel (θ) mit Bezug auf eine axiale Ebene der Hülse liegt.

2. Hülse nach Anspruch 1, dadurch gekennzeichnet, daß der spitze Winkel im Bereich von 20° bis 45° liegt.

3. Hülse nach Anspruch 2, dadurch gekennzeichnet, daß der spitze Winkel etwa 30° beträgt.

4. Hülse nach irgendeinem der Ansprüche 1 bis 3, dadurch gekennzeichnet, daß jede der Öffnungen (22) im wesentlichen parallele Seiten in Richtung der großen Abmessung (L) sowie abgerundete Enden hat.

5. Hülse nach irgendeinem der Ansprüche 1 bis 4, dadurch gekennzeichnet, daß die Hülse (12) in Umfangsrichtung durch die Schlitze (18) in Hülsensegmente (21) unterteilt ist, die gegenüber einer genauen vereinten zylindrischen Gestalt verzerrt sind in einem solchen Ausmaß, daß die Durchmesser $O_D$ und $I_D$ des äußeren und des inneren Teilungskreises an dem genannten einen Ende (20) der Hülse (12) wie folgt sind:

$$O_D \approx N_D + (T \pm 0.5T)$$

$$I_D = O_D - (3T \pm 0.5T),$$

worin $N_D$ der Nennaußenmesser am ungeteilten Teil der Hülse und T die Dicke der Hülse sind.

6. Hülse nach irgendeinem der Ansprüche 1 bis 5, dadurch gekennzeichnet, daß die Öffnungen (22) in Umfangsrichtung durch Stege (28) voneinander getrennt sind, die eine Breite haben, die gleich 0,5 bis 0,75 der kleinen Abmessung (W) der Öffnungen ist.

7. Verankerungsvorrichtung zur Verwendung als Mauerwerksanker, wobei die Vorrichtung eine zylindrische Ausdehnungshülse aus Metall und einen Ausdehnungsteil zum Ausdehnen der Hülse aufweist, dadurch gekennzeichnet, daß die Ausdehnungshülse eine Hülse gemäß irgendeinem der vorhergehenden Ansprüche ist.

8. Verankerungsvorrichtung nach Anspruch 7, dadurch gekennzeichnet, daß der Ausdehnungsteil einen Bolzen (14) aufweist, der einen konischen Kopf (24) hat, der in die Hülse (12) an dem genannten einen Ende (20) paßt, der konische Kopf (24) sich in seiner Querschnittsgröße in einer Richtung von dem genannten einen Ende der Hülse nach außen vergrößert, wodurch das genannte eine Ende der Hülse im Umfang ausgedehnt wird, wenn die konische Ausbildung in die Hülse getrieben wird.

**Revendications**

1. Douille d'expansion cylindrique métallique pour dispositif d'ancrage, ladite douille (12) ayant des extrémités opposées, une pluralité de trous (22) espacés circonférentiellement entre lesdites extrémités, et une pluralité de fentes (18) s'étendant chacune longitudinalement d'une desdites extrémités (20) à un desdits trous respectifs (22), chacun desdits trous ayant une grande dimension (L) et une petite dimension (W) à angle droit de la grande dimension, caractérisée par le fait que la grande dimension (L) de chaque trou fait un angle aigu (θ) par rapport à un plan axial de la douille.

2. Douille selon la revendication 1, caractérisée par le fait que ledit angle aigu est compris entre 20° et 45°.

3. Douille selon la revendication 2, caractérisée par le fait que ledit angle aigu est d'environ 30°.

4. Douille selon l'une des revendications 1 à 3, caractérisée par le fait que chacun desdits trous (22) comporte des côtés sensiblement parallèles dans la direction de ladite grande dimension (L) et des extrémités arrondies.

5. Douille selon l'une des revendications 1 à 4, caractérisée par le fait que la douille (12) est divisée circonférentiellement par lesdites fentes (18) en segments de douille (21) qui sont déformés, par rapport à une configuration cylindrique d'ensemble exacte, dans une mesure telle que les diamètres $O_D$ et $I_D$ des cercles primitifs extérieurs et intérieurs de ladite extrémité (20) de la douille (12) soient:

5

$$O_D \simeq N_D + (T \pm 0,5T)$$

$$I_D = O_D - (3T \pm 0,5T)$$

où $N_D$ est le diamètre extérieur nominal de la partie de la douille non divisée et T est l'épaisseur de la douille.

6. Douille selon l'une des revendications 1 à 5, caractérisée par le fait que les trous (22) sont séparés circonférentiellement les uns des autres par des cloisons (28) d'une largeur égale à 0,5 à 0,75 de la petite dimension (W) desdits trous.

7. Dispositif d'ancrage pour utilisation comme cheville de maçonnerie qui comprend une douille d'expansion cylindrique métallique et une pièce d'expansion pour produire l'expansion de la douille, caractérisé par le fait que ladite douille d'expansion est une douille selon l'une quelconque des revendications précédentes.

8. Dispositif d'ancrage selon la revendication 7, caractérisé par le fait que ladite pièce d'expansion comprend un boulon (14) à tête conique (24) logé dans ladite douille (12) à ladite extrémité (20), cette tête conique (24) ayant une dimension de section croissant dans une direction allant vers l'extérieur de ladite extrémité de la douille, grâce à quoi ladite extrémité de la douille s'expand circonférentiellement quand la formation conique est tirée à l'intérieur de la douille.

FIG 1

FIG 2

FIG 4B

FIG 3

FIG 4A